# EUROPEAN PATENT APPLICATION

(11) **EP 2 891 994 A1**
(43) Date of publication of application: **08.07.2015**
(21) Application number: 14806522.0
(22) Date of filing: 10.02.2014
(51) Int. Cl.: G06F 17/30

(54) **METHOD FOR ACHIEVING AUTOMATIC SYNCHRONIZATION OF MULTISOURCE HETEROGENEOUS DATA RESOURCES**

(30) Priority: 04.11.2013 CN 201315395366
(71) Applicant: Guangdong Electronics Industry Institute Ltd., Dongguan, Guangdong 523808 (CN)
(72) Inventor: XU, Cheng, DongGuan Guangdong 523808 (CN); XIE, Yi, DongGuan Guangdong 523808 (CN); LIU, Xiangtao, DongGuan Guangdong 523808 (CN); YUE, Qiang, DongGuan Guangdong 523808 (CN); JI, Tongkai, DongGuan Guangdong 523808 (CN)
(74) Representative: Hocking, Adrian Niall
(86) International application number: PCT/CN2014/071941
(87) International publication number: WO 2015/062181

(57) **Abstract**

A method for automatically synchronizing multi-source heterogeneous data resources utilizes a metadata service node, a service node and a production node, wherein the metadata service node stores a data dictionary of a distributed heterogeneous database system, the service node parses user requests of the distributed heterogeneous database system, for regularly synchronizing data with the production node; and the production node provides requests such as querying and updating of a relevant production application system; wherein the service node includes a configuration analyzer, a log parser and a synchronous update device; the configuration analyzer analyzes source database configurations on the production node, and selects an applicable synchronization method; the log parser parses logs of different database systems, which is a preparatory component of incremental synchronization; the synchronous update device recognizes the synchronization method according to the configuration analyzer for data synchronization. The method realizes automatic synchronization of the distributed heterogeneous database system, and is applicable to data resource treatment.

## Description

### Field of Invention

The present invention relates to a field of computer application technology, and more particularly to a method for automatically synchronizing multi-source heterogeneous data resources.

### Description of Related Arts

In the era of big data, storage and organization of data are the basis for the upper layer application services. With distributed heterogeneous database systems, different data sources are able to be integrated into one logically unified data source that provides data access interface for the upper layer application services. However, the distributed heterogeneous database systems have no impact on the production node. Therefore, the production system is only able to be a data source of the heterogeneous database system, which means synchronizing the data on the production node to a front-end processor, as an operation object of the heterogeneous database systems. Data on the front-end processor node and the production node needs to be updated regularly for providing valid data sources for the upper layer application services.

Between different database systems, data synchronization and backup technologies utilized are quite different, and requires the user to have certain background knowledge and correctly configure relevant parameters before implementing the data synchronization technology. This method is limited by user level and database system differences, so that the data synchronization process is difficult to be automatic. Therefore, designing an automatic data synchronization mechanism for synchronization of data between the production node and the front-end processor node is a key to solve such problems.

From a technical method level, there are two approaches for data synchronization, so as to synchronize data between the production node and the front-end processor node.

Firstly, for the production node, logs thereof are analyzed for extracting DDL and DML statements. The statements are sent to the front-end processor node. Front-end processor node provides incremental synchronization according to DDL and DML statements. The mechanism is able to rapidly synchronize data between the production node and the front-end processor node. However, problems of the mechanism are: (1) production node is required to enable the database logging and related parameters must be correctly configure; otherwise, incremental synchronization is not able to be provided; (2) database system generally provides an interface for parsing logs instead of provide complete incremental synchronization; and (3) logging methods differ with different database systems, and the user needs certain knowledge for parsing the logs. The above factors all limit application of the incremental synchronization.

Secondly, total synchronization may be provided between the production node and the front-end processor node. During synchronization, the database on the production node synchronizes all the data to the front-end processor node. Therefore, the synchronization method consumes a large amount of system resources. Furthermore, some of the databases do not provide a complete data migration tool. As a result, there is no automatic synchronization.

### Summary of the Present Invention

An object of the present invention is to provide a method for automatically synchronizing multi-source heterogeneous data resources, which is provided between a production node and a front-end processor node for data synchronization.

Accordingly, in order to accomplish the above object, the present invention provides a method for automatically synchronizing multi-source heterogeneous data resources, comprising steps of:
firstly, sending a synchronization request from a metadata service node to a front-end processor node, the front-end processor node receiving the synchronization request and parsing for obtaining parameters comprising database addresses, database names, user names and codes;
sending the parameters parsed to a configuration analyzer, connecting the configuration analyzer to a source database, reading log configuration information of the source database, and judging whether incremental synchronization is applicable according to a database type and the log configuration information;
if the incremental synchronization is applicable, a log parser initializing a parsing environment according to the database type, then starting a first thread, reading DDL and DML statements from logs in a database, and storing in a local cache; then a synchronous update device starting a second thread, loading the DML or the DDL statements in the local cache in sequence, and updating a database on the front-end processor node;
if the source database needs total synchronization, forming an automatic data synchronization script by the synchronous update device with a conventional data synchronization or back-up tool according to the database type; then beginning a process which runs the automatic data synchronization script by the synchronous update device, for data synchronization; and
after the data synchronization, updating synchronization state information of a source data node by the synchronous update device, and reporting that a synchronization process is complete.

A production node and the front-end processor node are components of a distributed heterogeneous database system, wherein the production node is a node for providing a data source in a production system; and the front-end processor node is a node for providing a data source in the distributed heterogeneous database system.

The configuration analyzer, the log parser and the synchronous update device are provided on the front-end processor node.

The configuration analyzer recognizes the log configuration information of every database type, and a reorganizing method thereof comprises steps of:
for a MySQL database, checking whether binary logging of the database is enabled, if the binary logging is not enabled, determining utilizing a total synchronization mode; if the binary logging is enabled, determining utilizing an incremental synchronization mode;
for Oracle and DB2 databases, checking whether an achieving log mode of a database system is enabled, if the achieving log mode is enabled, determining utilizing the incremental synchronization mode; if the achieving log mode is not enabled, determining utilizing the total synchronization mode; and
for an SQL Server database, checking whether a log mode thereof is a complete log working mode, if the log mode thereof is the complete log working mode, determining utilizing an incremental synchronization mode; if the log mode thereof is not the complete log working mode, determining utilizing a total synchronization mode.

When the incremental synchronization is applicable to the source database, the log parser firstly obtains all logs generated with a certain period, and parses the logs according to the database type for obtaining the DDL and the DML statements; for each database, the log parser utilizes different parsing methods comprising steps of:
for the MySQL database, querying log contents by utilizing a built-in mysqlbinlog tool, for obtaining the DDL and the DML statements;
for the Oracle database, parsing achieving log contents with a LogMiner tool, comprising steps of: firstly, obtaining a data dictionary for the LogMiner tool from a redo log by utilizing a built-in storage process sys.DBMS._LOGMNR_D.BUILD; then adding the logs and parsing the logs; at last, checking a parsed result view for obtaining the DDL and the DML statements;
for the DB2 database, initializing the parsing environment by utilizing a built-in API interface, which is db2ReadLogNoConn, of the database system; then parsing the logs in sequence by utilizing a db2ReadLog interface for obtaining the DDL and the DML statements; and
for the SQL Server database, reading the log of the SQL Server with fn_dblog, and parsing the logs in sequence according to a binary log format of the SQL Server for obtaining the DDL and the DML statements.

When a synchronization method is determined, the synchronous update device updates the database on the front-end processor node according to the synchronization method; if the incremental synchronization is utilized, the synchronous update device starts the first thread for obtaining the DDL and the DML statements and stores in the local cache; in the meantime, the synchronous update device starts the second thread for executing the DDL and the DML statements, and updating local service contents; if the total synchronization is utilized, the synchronous update device starts a third thread and forms a data synchronization script; the synchronous update device creates an object ProcessBuilder by utilizing a system process for executing the data synchronization script, and redirects an error output stream to an input stream for obtaining synchronization schedule information; a method thereof comprises steps of:
for the Oracle and the MySQL databases, utilizing dump and load tools provided in the database system by the synchronous update device for copying source database contents to a server of a target database, then loading data with the load tool; and
for the DB2 database, cataloging source data with a built-in order of the DB2 database; then obtaining all table names of the source database with a db21ook tool; then checking an encoded mode of the source database with an export tool and exporting data of the source database in an order of tables in an ixf format; at last, loading the data to a local database with a load tool.

The present invention has advantages as follows.
(1) The database type is automatically recognized and the configuration is judged for automatic data synchronization, wherein by analyzing the configuration parameters of the source database to be synchronized, the system selects a reasonable synchronization method and packages details during the data synchronization process of various databases, for providing a uniformed interface for an upper layer application system, and decreasing user configuration difficulty. At the same time, the conventional database synchronization tools are integrated in the system and the automatic data synchronization method is formed for automatic database synchronization.
(2) The database synchronization is simplified and user experience is improved. The data synchronization mechanism according to the present invention is for different database types, which simplifies the data synchronization by packaging the details during the synchronization process, for simplifying the data synchronization, improving the user experience and satisfying automatic synchronization requirements.
(3) An integrated data synchronization interface is provided, and databases of different types are able to be synchronized, wherein by integrating, data synchronization of different databases is supported, which enlarges an application range of the data synchronization. At the same time, according to the present invention, the automatic data synchronization method is provided by integrating tools such as log analysis and data migration. By packaging the details during the synchronization process, a uniformed data synchronization configuration tool for the upper layer application interface are provided, and difference between bottom layer synchronization is shielded.

### Brief Description of the Drawings

Referring to the drawings, the present invention is further illustrated.

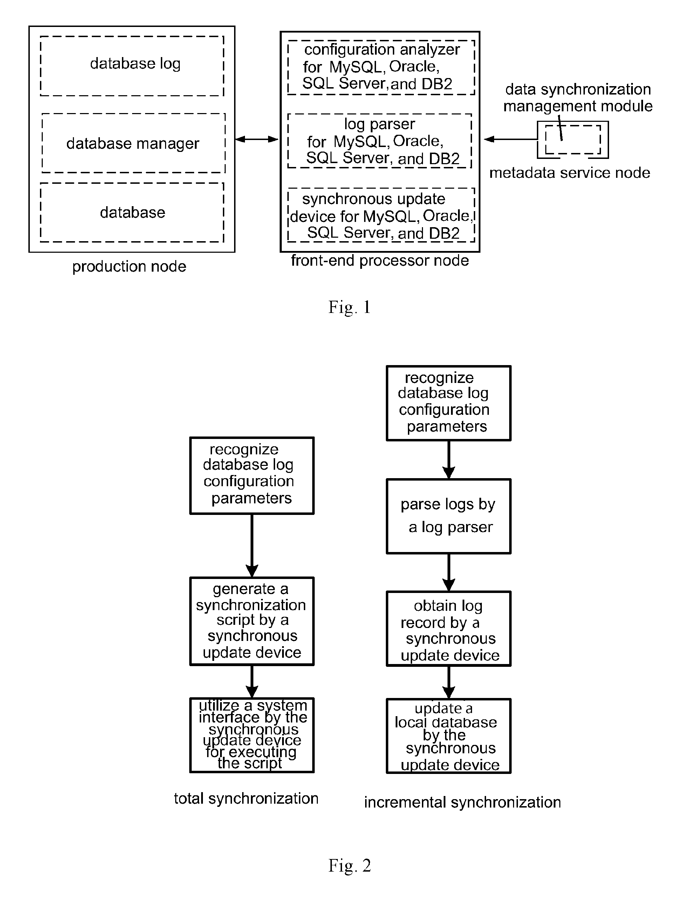

Fig. 1 is a diagrammatical representation of system components of the present invention.
Fig. 2 is a flow chart of the present invention.

### Detailed Description of the Preferred Embodiment

Due the reasons such as historical factors, during construction of an information system, databases of different types are usually utilized. Data of different databases are not able to be directly shared by an upper layer application system, which causes a "data island" phenomenon. A distributed heterogeneous database system buffers querying results of different databases through a middle data engine, for providing a uniformed data access interface for the upper layer system and shielding querying details of a bottom layer. According to the present invention, a production node and a front-end processor node are components of the distributed heterogeneous database system, wherein the production node is a node provided in a production system and providing a data source; and the front-end processor node is a node provided in the distributed heterogeneous database system and providing a data source, which regularly synchronizes data with the production node, in such a manner that the data on the front-end processor node keeps in line with the data on the production node.

A method for automatically synchronizing multi-source heterogeneous data resources of the present invention is illustrated, comprising steps of: after setting synchronization parameters, sending a data synchronization request from a metadata service node to a front-end processor node, a front-end processor node reading the synchronization parameters, and analyzing database configuration on a production node; according to an analysis result, the front-end processor node selecting incremental synchronization or total synchronization, and synchronizing data on the production node to the front-end processor node. During synchronization, a user only need to provide information such as a database name, a database address, a user name and a code, then synchronization between the production node and the front-end processor node is available. Compared with conventional data synchronization technologies, the present invention packages details during a data synchronization process of various databases, and is able to automatically select a suitable synchronization method for data synchronization.

Accordingly, an automatic data synchronization mechanism is provided, comprising: a configuration analyzer, a log parser and a synchronous update device.

The configuration analyzer accesses to databases on the production node and reads relevant configurations, so as to analyze whether the incremental synchronization is applicable to the database.

The log parser reads and parsing database logs on the production node, for obtaining DML and DDL operation statements. The front-end processor node brings a parsing result from the production node through network, and stores in a local cache.

The synchronous update device synchronizes the data according to the analysis result after the database configuration is analyzed by the configuration analyzer. If the configuration analyzer determines that the incremental synchronization is applicable to the database on the production node, the synchronous update device utilizes the log parser for obtaining the DDL and the DML statements in the local cache, so as to updating database contents on the front-end processor node. If the configuration analyzer determines that the total synchronization is needed for a production database, the synchronous utilizes a built-in data migrate or back-up tool of the database for transferring the data from the production node to the front-end processor node, so as to update the database contents on the front-end processor node.

Referring to the drawings, the method specifically comprises steps of: firstly, sending a synchronization request from a metadata service node to the front-end processor node, receiving the synchronization request by the front-end processor node and parsing for obtaining parameters comprising the database addresses, the database names, the user names and the codes; sending the parameters parsed to the configuration analyzer, connecting the configuration analyzer to a source database, reading log configuration information of the source database, and judging whether the incremental synchronization is applicable according to a database type and the log configuration information; if the incremental synchronization is applicable, initializing a parsing environment by the log parser according to the database type; then starting a first thread, reading the DDL and the DML statements from logs in the database, and storing in the local cache; then starting a second thread by the synchronous update device, loading the DML or the DDL statements in the local cache in sequence, and updating the database on the front-end processor node; if the source needs total synchronization, forming an automatic data synchronization script by the synchronous update device with a conventional data synchronization or back-up tool according to the database type; then beginning a process which runs the automatic data synchronization script by the synchronous update device, for data synchronization; and after the data synchronization, updating synchronization state information of a source data node by the synchronous update device, and reporting that a synchronization process is complete.

According to the present invention, for providing data synchronization processes for databases of different types, the configuration analyzer recognizes the log configuration information of every database type, and a reorganizing method thereof comprises steps of:
for a MySQL database, checking whether binary logging of the database is enabled, if the binary logging is not enabled, determining utilizing a total synchronization mode; if the binary logging is enabled, determining utilizing an incremental synchronization mode;
for Oracle and DB2 databases, checking whether an achieving log mode of a database system is enabled, if the achieving log mode is enabled, determining utilizing the incremental synchronization mode; if the achieving log mode is not enabled, determining utilizing the total synchronization mode; and
for an SQL Server database, checking whether a log mode thereof is a complete log working mode, if the log mode thereof is the complete log working mode, determining utilizing an incremental synchronization mode; if the log mode thereof is not the complete log working mode, determining utilizing a total synchronization mode.

According to the log analyzer, when the incremental synchronization is applicable to the source database, the log parser firstly obtains all logs generated with a certain period, and parses the logs according to the database type for obtaining the DDL and the DML statements. Because the distributed heterogeneous database system is based on a virtual table concept, the log parser only obtains the DDL and the DML statements for table operations. At the same time, for each database, the log parser utilizes different parsing methods comprising steps of:
for the MySQL database, querying log contents by utilizing a built-in mysqlbinlog tool, for obtaining the DDL and the DML statements;
for the Oracle database, parsing achieving log contents with a LogMiner tool, comprising steps of: firstly, obtaining a data dictionary for the LogMiner tool from a redo log by utilizing a built-in storage process sys.DBMS._LOGMNR_D.BUILD; then adding the logs and parsing the logs; at last, checking a parsed result view for obtaining the DDL and the DML statements;
for the DB2 database, initializing the parsing environment by utilizing a built-in API interface, which is db2ReadLogNoConn, of the database system; then parsing the logs in sequence by utilizing a db2ReadLog interface for obtaining the DDL and the DML statements; and
for the SQL Server database, reading the log of the SQL Server with fn_dblog, and parsing the logs in sequence according to a binary log format of the SQL Server for obtaining the DDL and the DML statements.

According to the synchronous update device, when a synchronization method is determined, the synchronous update device updates the database on the front-end processor node according to the synchronization method; if the incremental synchronization is utilized, the synchronous update device starts the first thread for obtaining the DDL and the DML statements and stores in the local cache; in the meantime, the synchronous update device starts the second thread for executing the DDL and the DML statements, and updating local service contents; if the total synchronization is utilized, the synchronous update device starts a third thread and forms a data synchronization script; the synchronous update device creates an object ProcessBuilder by utilizing a system process for executing the data synchronization script, and redirects an error output stream to an input stream for obtaining synchronization schedule information; a method thereof comprises steps of:
1) for the Oracle and the MySQL databases, utilizing dump and load tools provided in the database system by the synchronous update device for copying source database contents to a server of a target database, then loading data with the load tool; and
2) for the DB2 database, cataloging source data with a built-in order of the DB2 database; then obtaining all table names of the source database with a db21ook tool; then checking an encoded mode of the source database with an export tool and exporting data of the source database in an order of tables in an ixf format; at last, loading the data to a local database with a load tool.

## Claims

1. A method for automatically synchronizing multi-source heterogeneous data resources, comprising steps of:
firstly, sending a synchronization request from a metadata service node to a front-end processor node, the front-end processor node receiving the synchronization request and parsing for obtaining parameters comprising database addresses, database names, user names and codes;
sending the parameters parsed to a configuration analyzer, connecting the configuration analyzer to a source database, reading log configuration information of the source database, and judging whether incremental synchronization is applicable according to a database type and the log configuration information;
if the incremental synchronization is applicable, a log parser initializing a parsing environment according to the database type, then starting a first thread, reading DDL and DML statements from logs in a database, and storing in a local cache; then a synchronous update device starting a second thread, loading the DML or the DDL statements in the local cache in sequence, and updating a database on the front-end processor node;
if the source database needs total synchronization, forming an automatic data synchronization script by the synchronous update device with a conventional data synchronization or back-up tool according to the database type; then beginning a process which runs the automatic data synchronization script by the synchronous update device for data synchronization; and
after the data synchronization, updating synchronization state information of a source data node by the synchronous update device, and reporting that a synchronization process is complete.

2. A method for automatically synchronizing multi-source heterogeneous data resources as claimed in claim 1, wherein a production node and the front-end processor node are components of a distributed heterogeneous database system, wherein the production node is a node for providing a data source in a production system; and the front-end processor node is a node for providing a data source in the distributed heterogeneous database system.

3. A method for automatically synchronizing multi-source heterogeneous data resources as claimed in claim 1, wherein the configuration analyzer, the log parser and the synchronous update device are provided on the front-end processor node.

4. A method for automatically synchronizing multi-source heterogeneous data resources as claimed in claim 2, wherein the configuration analyzer, the log parser and the synchronous update device are provided on the front-end processor node.

5. A method for automatically synchronizing multi-source heterogeneous data resources as claimed in claim any one of claims 1 to 4, wherein the configuration analyzer recognizes the log configuration information of every database type, a reorganizing method thereof comprises steps of:
for a MySQL database, checking whether binary logging of the database is enabled, if the binary logging is not enabled, determining utilizing a total synchronization mode; if the binary logging is enabled, determining utilizing an incremental synchronization mode;
for Oracle and DB2 databases, checking whether an achieving log mode of a database system is enabled, if the achieving log mode is enabled, determining utilizing the incremental synchronization mode; if the achieving log mode is not enabled, determining utilizing the total synchronization mode; and
for an SQL Server database, checking whether a log mode thereof is a complete log working mode, if the log mode thereof is the complete log working mode, determining utilizing an incremental synchronization mode; if the log mode thereof is not the complete log working mode, determining utilizing a total synchronization mode.

6. A method for automatically synchronizing multi-source heterogeneous data resources as claimed in any one of claims 1 to 4, wherein when the incremental synchronization is applicable to the source database, the log parser firstly obtains all logs generated within a certain period, and parses the logs according to the database type for obtaining the DDL and the DML statements; for each database, the log parser utilizes different parsing methods comprising steps of:
for a MySQL database, querying log contents by utilizing a built-in mysqlbinlog tool, for obtaining the DDL and the DML statements;
for a Oracle database, parsing achieving log contents with a LogMiner tool, comprising steps of: firstly, obtaining a data dictionary for the LogMiner tool from a redo log by utilizing a built-in storage process sys.DBMS._LOGMNR_D.BUILD; then adding the logs and parsing the logs; at last, checking a parsed result view for obtaining the DDL and the DML statements;
for a DB2 database, initializing the parsing environment by utilizing a built-in API interface, which is db2ReadLogNoConn, of the database system; then parsing the logs in sequence by utilizing a db2ReadLog interface for obtaining the DDL and the DML statements; and
for an SQL Server database, reading the log of the SQL Server with fn_dblog, and parsing the logs in sequence according to a binary log format of the SQL Server for obtaining the DDL and the DML statements.

7. A method for automatically synchronizing multi-source heterogeneous data resources as claimed in claim 5, wherein when the incremental synchronization is applicable to the source database, the log parser firstly obtains all logs generated with a certain period, and parses the logs according to the database type for obtaining the DDL and the DML statements; for each database, the log parser utilizes different parsing methods comprising steps of:
for the MySQL database, querying log contents by utilizing a built-in mysqlbinlog tool, for obtaining the DDL and the DML statements;
for the Oracle database, parsing achieving log contents with a LogMiner tool, comprising steps of: firstly, obtaining a data dictionary for the LogMiner tool from a redo log by utilizing a built-in storage process sys.DBMS._LOGMNR_D.BUILD; then adding the logs and parsing the logs; at last, checking a parsed result view for obtaining the DDL and the DML statements;
for the DB2 database, initializing the parsing environment by utilizing a built-in API interface, which is db2ReadLogNoConn, of the database system; then parsing the logs in sequence by utilizing a db2ReadLog interface for obtaining the DDL and the DML statements; and
for the SQL Server database, reading the log of the SQL Server with fn_dblog, and parsing the logs in sequence according to a binary log format of the SQL Server for obtaining the DDL and the DML statements.

8. A method for automatically synchronizing multi-source heterogeneous data resources as claimed in any one of claims 1 to 4, wherein when a synchronization method is determined, the synchronous update device updates the database on the front-end processor node according to the synchronization method; if the incremental synchronization is utilized, the synchronous update device starts the first thread for obtaining the DDL and the DML statements and stores in the local cache; in the meantime, the synchronous update device starts the second thread for executing the DDL and the DML statements, and updating local service contents; if the total synchronization is utilized, the synchronous update device starts a third thread and forms a data synchronization script; the synchronous update device creates an object ProcessBuilder by utilizing a system process for executing the data synchronization script, and redirects an error output stream to an input stream for obtaining synchronization schedule information; a method thereof comprises steps of:
for Oracle and MySQL databases, utilizing dump and load tools provided in a database system by the synchronous update device for copying source database contents to a server of a target database, then loading data with the load tool; and
for a DB2 database, cataloging source data with a built-in order of the DB2 database; then obtaining all table names of the source database with a db21ook tool; then checking an encoded mode of the source database with an export tool and exporting data of the source database in an order of tables in an ixf format; at last, loading the data to a local database with a load tool.

9. A method for automatically synchronizing multi-source heterogeneous data resources as claimed in claim 5, wherein when a synchronization method is determined, the synchronous update device updates the database on the front-end processor node according to the synchronization method; if the incremental synchronization is utilized, the synchronous update device starts the first thread for obtaining the DDL and the DML statements and stores in the local cache; in the meantime, the synchronous update device starts the second thread for executing the DDL and the DML statements, and updating local service contents; if the total synchronization is utilized, the synchronous update device starts a third thread and forms a data synchronization script; the synchronous update device creates an object ProcessBuilder by utilizing a system process for executing the data synchronization script, and redirects an error output stream to an input stream for obtaining synchronization schedule information; a method thereof comprises steps of:
for the Oracle and the MySQL databases, utilizing dump and load tools provided in the database system by the synchronous update device for copying source database contents to a server of a target database, then loading data with the load tool; and
for the DB2 database, cataloging source data with a built-in order of the DB2 database; then obtaining all table names of the source database with a db21ook tool; then checking an encoded mode of the source database with an export tool and exporting data of the source database in an order of tables in an ixf format; at last, loading the data to a local database with a load tool.

10. A method for automatically synchronizing multi-source heterogeneous data resources as claimed in claim 6, wherein when a synchronization method is determined, the synchronous update device updates the database on the front-end processor node according to the synchronization method; if the incremental synchronization is utilized, the synchronous update device starts the first thread for obtaining the DDL and the DML statements and stores in the local cache; in the meantime, the synchronous update device starts the second thread for executing the DDL and the DML statements, and updating local service contents; if the total synchronization is utilized, the synchronous update device starts a third thread and forms a data synchronization script; the synchronous update device creates an object ProcessBuilder by utilizing a system process for executing the data synchronization script, and redirects an error output stream to an input stream for obtaining synchronization schedule information; a method thereof comprises steps of:
for the Oracle and the MySQL databases, utilizing dump and load tools provided in the database system by the synchronous update device for copying source database contents to a server of a target database, then loading data with the load tool; and
for the DB2 database, cataloging source data with a built-in order of the DB2 database; then obtaining all table names of the source database with a db21ook tool; then checking an encoded mode of the source database with an export tool and exporting data of the source database in an order of tables in an ixf format; at last, loading the data to a local database with a load tool.
